# EUROPEAN PATENT APPLICATION

(11) **EP 4 730 455 A1**
(43) Date of publication of application: **22.04.2026**
(21) Application number: 24913466.9
(22) Date of filing: 26.11.2024
(51) Int. Cl.: H01M 10/04

(54) **INSERT DEVICE**

(30) Priority: 26.12.2023 KR 20230191776; 22.03.2024 KR 20240039950
(71) Applicant: LG Energy Solution, Ltd., Seoul 07335 (KR)
(72) Inventor: PARK, Hyeon-Jun, Daejeon 34122 (KR); KWON, Yong-Hwan, Daejeon 34122 (KR); OH, Kyung-Teak, Daejeon 34122 (KR)
(74) Representative: Goddar, Heinz J.
(86) International application number: PCT/KR2024/018914
(87) International publication number: WO 2025/143573

(57) **Abstract**

An insert device according to an embodiment of the present disclosure inserts an electrode assembly unit including an electrode assembly and a first current collector coupled to one surface of the electrode assembly into a battery can, and the insert device includes a can holder holding the battery can, a lower stopper supporting the electrode assembly unit from below and configured to be movable in a direction parallel to a central axis of the electrode assembly unit, and an air blower provided on the lower stopper and configured to inject air into the electrode assembly unit in a direction toward the battery can.

## Description

### TECHNICAL FIELD

The present disclosure relates to an insert device. More specifically, the present disclosure relates to an insert device for inserting an electrode assembly unit into a battery can.

This application is based on and claims priority from Korean Patent Application No. 10-2023-0191776, filed on December 26, 2023 and Korean Patent Application No. 10-2024-0039950, filed on March 22, 2024, with the Korean Intellectual Property Office, the disclosure of which is incorporated herein in its entirety by reference.

### BACKGROUND ART

Secondary batteries having high applicability according to product groups and electrical characteristics such as high energy density are commonly applied not only to portable devices but also to electric vehicles (EVs) or hybrid electric vehicles (HEVs) driven by electric power sources. Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries and the like. An operating voltage of the unit secondary battery cell, namely a unit battery cell, is about 2.5 V to 4.5 V. Therefore, if a higher output voltage is required, a plurality of battery cells may be connected in series to form a battery pack. Additionally, depending on the charging and discharging capacity required for the battery pack, a plurality of battery cells may be connected in parallel to form a battery pack. Thus, the number of battery cells included in the battery pack may be variously set according to the required output voltage and/or the demanded charging and discharging capacity.

Meanwhile, in the cylindrical secondary battery manufacturing process, an insertion process of inserting an electrode assembly into a battery can is performed. In the insertion process, the electrode assembly is inserted into the battery can from the bottom to the top.

Meanwhile, insert devices of some electrode assembly such as conventional 4680 and 4695 cells have a structure that is disadvantageous to the process due to the loosening of electrode assembly core reform caused by exhaust of air inside the can. Additionally, various problems occurred due to the phenomenon of core reform loosening in the post-processing operation. In addition, there were problems of separator damage, and reduced battery capacity and life during cathode rivet welding (CRW). More specifically, separator deformation occurred due to irregular core flow by the positive electrode current collector plate at the bottom of the electrode assembly.

### DISCLOSURE

### Technical Problem

Therefore, to solve the above problems, the present disclosure is directed to preventing deformation of the separator by reducing pressure through air injection when the air inside the battery can is discharged during the insertion process of the electrode assembly.

Additionally, the present disclosure is also directed to improving the battery capacity and life due to the improvement of core impingement by reducing the level of reform loosening.

In addition, the present disclosure is still also directed to reducing damage to the separator of the electrode assembly and improving the process efficiency.

Furthermore, the present disclosure is still also directed to achieving cost reduction.

However, technical problems to be solved by the present disclosure are not limited to the above-described problems, and other problems not mentioned herein may be clearly understood by those having ordinary skill in the art from the following description of the present disclosure.

### Technical Solution

An insert device according to an embodiment of the present disclosure for solving the above-described problem inserts an electrode assembly unit including an electrode assembly and a first current collector coupled to one surface of the electrode assembly into a battery can, and the insert device includes a can holder holding the battery can; a lower stopper supporting the electrode assembly unit from below and configured to be movable in a direction parallel to a central axis of the electrode assembly unit; and an air blower provided on the lower stopper and configured to inject air into the electrode assembly unit in a direction toward the battery can.

According to one aspect of the present disclosure, the first current collector may be coupled to a surface of the electrode assembly in a direction toward the battery can among surfaces of the electrode assembly.

Preferably, the first current collector may have an area smaller than an area of one surface of the electrode assembly.

According to one aspect of the present disclosure, the lower stopper may be configured to insert the electrode assembly unit into the battery can.

Preferably, the lower stopper may be configured to push the electrode assembly unit positioned below the can upward to push the electrode assembly unit toward an opening of the battery can.

According to another aspect of the present disclosure, the air blower may be configured to inject air toward a winding center of the electrode assembly unit.

Preferably, the air blower may be configured to inject air in an insertion direction of the electrode assembly unit.

More preferably, the air blower may be configured to inject air from the bottom to the top in a direction parallel to a central axis of the electrode assembly unit.

According to still another aspect of the present disclosure, the air blower may be configured to offset pressure acting on the winding center hole region of the electrode assembly.

According to still another aspect of the present disclosure, the air blower may be configured to inject air so that the difference between the internal pressure of the battery can and the external pressure of the battery can is 5 mbar or less.

According to still another aspect of the present disclosure, the air blower may be configured to operate after the electrode assembly unit is inserted to a predetermined length of the battery can in the longitudinal direction.

Preferably, the air blower may be configured to operate after the electrode assembly unit is inserted to a 1/3 point of the battery can in the longitudinal direction.

According to still another aspect of the present disclosure, the air blower may be configured to inject air so that the diameter of the winding center after deformation of the electrode assembly unit is greater than 75% of the diameter of the winding center before deformation of the electrode assembly unit.

Preferably, the air blower may be configured to inject air so that the pressure within the battery can is less than or equal to a value at which the shape of the winding center of the electrode assembly unit is not deformed.

### Advantageous Effects

According to the present disclosure, deformation of the separator may be prevented by reducing pressure through air injection when the air inside the battery can is discharged during the insertion process of the electrode assembly.

Additionally, according to the present disclosure, the battery capacity and life may be improved due to the improvement of core impingement by reducing the level of reform loosening.

In addition, according to the present disclosure, damage to the separator of the electrode assembly may be reduced and the process capability may be improved.

Furthermore, according to the present disclosure, cost reduction may be achieved.

However, effects to be obtained by the present disclosure are not limited to the above-described effects, and other effects not mentioned herein may be clearly understood by those having ordinary skill in the art from the following description of the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view for describing an insert device according to an embodiment of the present disclosure.
FIG. 2 is a view for describing a process in which an electrode assembly unit is inserted into a battery can in the insert device of FIG. 1.
FIG. 3 is a view for describing a process in which an electrode assembly unit is inserted into a battery can.
FIG. 4 is a view for describing the movement of air in a process in which an electrode assembly unit is inserted into a battery can.
FIG. 5 is a view for describing a direction in which air is injected into an electrode assembly unit when air movement as in FIG. 4 occurs.
FIG. 6 is a view for describing a process in which air injected into an electrode assembly unit moves inside an electrode assembly when air movement as in FIG. 4 occurs.
FIG. 7 is a view for describing a region in which the electrode assembly is affected by air during the process of FIGS. 4 to 6.
FIG. 8 is a view for describing a state in which the electrode assembly is deformed by the effect due to air during the process of FIGS. 4 to 6.
FIG. 9 is a view for describing a process in which air is injected into an electrode assembly and a battery can by an air blower in an insert device according to an embodiment of the present disclosure.
FIG. 10 is a view for describing an air movement path by an air blower in an insert device according to an embodiment of the present disclosure.
FIG. 11 is an enlarged view of a winding center hole of an electrode assembly inserted into a battery can by an insert device according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Additionally, to help understanding of the present disclosure, the accompanying drawings are not drawn to actual scale, but dimensions of some components may be exaggerated.

In the cylindrical secondary battery manufacturing process, an insertion process of inserting an electrode assembly unit EA into a battery can C is performed. In the insertion process, the electrode assembly unit EA is inserted into the battery can C from the bottom to the top. Meanwhile, insert devices of some electrode assembly E such as conventional 4680 and 4695 cells have a structure that is disadvantageous to the process due to the loosening of electrode assembly E core reform caused by exhaust of air inside the can. The reform process is a process of securing a circular space in the core portion by processing the separator located in the core portion of the electrode assembly E. Additionally, various problems occurred due to the phenomenon of core reform loosening in the post-processing operation. In addition, there were problems of separator damage, and reduced battery capacity and life during cathode rivet welding (CRW, a welding process of positive electrode assembly and terminals). More specifically, separator deformation occurred due to irregular core flow by the positive electrode current collector positioned at one end of the electrode assembly E.

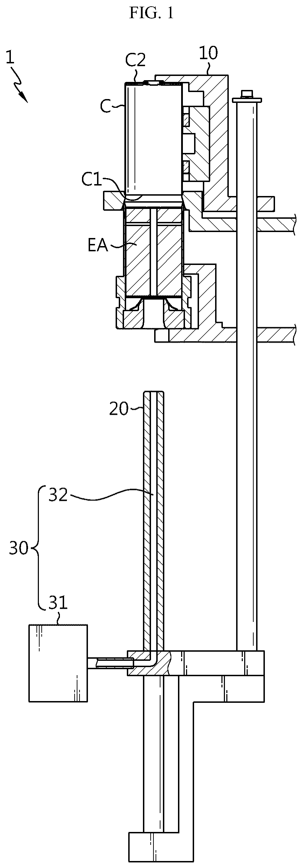

The present disclosure recognizes such problems and is configured to include an air blower for injecting air into the insert device 1, and this specific structure of the present disclosure will be described in detail with reference to FIGS. 1 to 11 below.

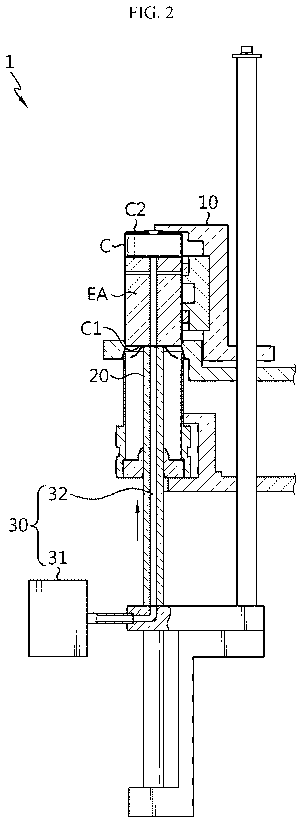

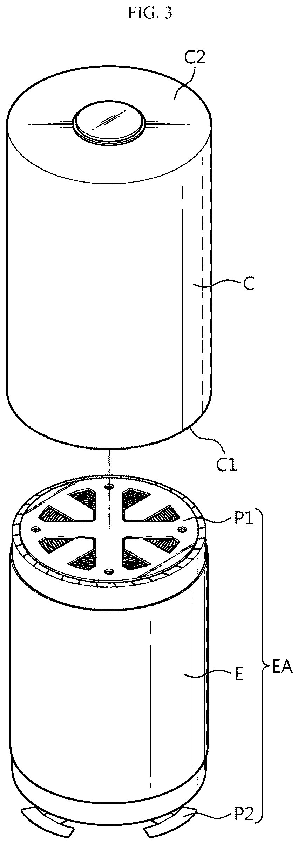

FIG. 1 is a view for describing an insert device 1 according to an embodiment of the present disclosure, and FIG. 2 is a view for describing a process in which an electrode assembly unit EA is inserted into a battery can C in the insert device 1 of FIG. 1. FIG. 3 is a view for describing a process in which an electrode assembly unit EA is inserted into a battery can C.

Referring to FIGS. 1 and 2, an insert device 1 according to an embodiment of the present disclosure includes a can holder 10, a lower stopper 20, and an air blower 30. The insert device 1 may be an insert device 1 that inserts an electrode assembly unit EA including an electrode assembly E and a first current collector P1 coupled to one surface of the electrode assembly E into a battery can C.

More specifically, the insert device 1 may include a can holder 10 holding the battery can C; a lower stopper 20 supporting the electrode assembly unit EA from below and configured to be movable in a direction parallel to a central axis of the electrode assembly unit EA; and an air blower 30 provided on the lower stopper 20 and configured to inject air into the electrode assembly unit EA in a direction toward the battery can C.

According to this structure, when the air inside the battery can C is discharged during the electrode assembly E insertion process, deformation of the separator may be prevented by reducing the pressure through air injection. Additionally, according to the above structure, by reducing the level of reform loosening, the battery capacity and life may be improved due to the improvement of core impingement. Accordingly, the damage to the separator of the electrode assembly E may be reduced and the process capability may be improved.

In one aspect of the present disclosure, the electrode assembly unit EA may include an electrode assembly E, a first current collector P1, and a second current collector P2. That is, the electrode assembly unit EA may be in a state in which the first current collector P1 and the second current collector P2 are coupled to the electrode assembly E.

The electrode assembly E includes a first electrode having a first polarity, a second electrode having a second polarity, and a separator interposed between the first electrode and the second electrode. The first electrode is a positive electrode or a negative electrode, and the second electrode corresponds to an electrode having a polarity opposite to that of the first electrode.

The electrode assembly E may have, for example, a jelly-roll structure. That is, the electrode assembly E may be manufactured by winding a stack formed by stacking a first electrode plate and a second electrode plate in a sheet shape at least once with a separator interposed therebetween in one direction based on the winding center hole H1. In this case, an additional separator may be provided on the outer circumferential surface of the electrode assembly E for insulation from the battery can C. Any jelly-roll structure known in the art may be applied to the present disclosure without limitation.

The first electrode includes a first electrode plate and a first electrode active material applied to one or both surfaces of the first electrode plate. A first uncoated portion to which the first electrode active material is not applied exists at one end of the first electrode plate in the width direction. The first uncoated portion functioning as a first electrode tab will be referred to as a first uncoated portion hereinafter. The first uncoated portion is provided at the upper portion in the height direction of the electrode assembly E accommodated in the battery can C. That is, the first electrode plate includes a first uncoated portion that is not coated with an active material layer on a long side end and is exposed to the outside of the separator, and a part of the first uncoated portion is used as an electrode tab by itself. The first uncoated portion may be, for example, a positive electrode tab.

Meanwhile, at least a part of the first uncoated portion may include a plurality of segments divided along the winding direction of the electrode assembly E. In this case, the plurality of segments may be bent along the radial direction of the electrode assembly E. The plurality of bent segments may be overlapped in multiple layers. In this case, the first current collector P1 to be described later may be coupled to a region where the plurality of segments are overlapped in multiple layers.

The second electrode includes a second electrode plate and a second electrode active material applied to one or both surfaces of the second electrode plate. A second uncoated portion to which the second electrode active material is not applied exists at the other end of the second electrode plate in the width direction. The second uncoated portion functioning as a second electrode tab will be referred to as a second uncoated portion hereinafter. The second uncoated portion is provided at the lower portion in the height direction of the electrode assembly E accommodated in the battery can C. That is, the second electrode plate includes a second uncoated portion that is not coated with an active material layer on a long side end and is exposed to the outside of the separator, and at least a part of the second uncoated portion is used as an electrode tab by itself. The second uncoated portion may be, for example, a negative electrode tab. Meanwhile, at least a part of the second uncoated portion may include a plurality of segments divided along the winding direction of the electrode assembly E. In this case, the plurality of segments may be bent along the radial direction of the electrode assembly E. The plurality of bent segments may be overlapped in multiple layers. In this case, the second current collector P2 may be coupled to a region where the plurality of segments are overlapped in multiple layers. In the present disclosure, the positive electrode active material coated on the positive electrode plate and the negative electrode active material coated on the negative electrode plate may be used without limitation as long as they are active materials known in the art.

The battery can C may be configured to include an opening C1 on one side and to accommodate the electrode assembly E through the opening C1.

Specifically, the battery can C is a roughly cylindrical receptacle having an opening C1 formed at the bottom, and is made of a conductive material such as metal, for example. The material of the battery can C may include, for example, steel, stainless steel, nickel-plated iron, or the like. The upper surface positioned opposite to the opening C1 is referred to as a closed portion C2. The side wall portion and the closed portion C2 of the battery can C may be formed integrally. Alternatively, the side wall portion and the closed portion C2 of the battery can C may be provided separately from each other and then be coupled to each other by welding or the like. The upper surface (a surface parallel to the X-Y plane) of the battery can C, that is, the outer surface of the closed portion C2, may have a roughly flat shape. The battery can C may accommodate the electrode assembly E through the opening C1 formed at the bottom.

The battery can C is electrically connected to the electrode assembly E. The battery can C is electrically connected to, for example, the second uncoated portion of the electrode assembly E. In this case, the battery can C has the same polarity as the second uncoated portion.

The first current collector P1 may be accommodated inside the battery can C, and may be electrically connected to the electrode assembly E. The first current collector P1 may have, for example, a roughly plate shape. The first current collector P1 may be interposed between the first uncoated portion and the terminal 50. That is, the first current collector P1 may have the same electrode as the first uncoated portion. The first current collector P1 may be coupled to a surface where the first uncoated portion is bent. The first current collector P1 may be, for example, a positive electrode current collector.

The second current collector P2 may be accommodated inside the battery can C, may be electrically connected to the electrode assembly E, and may also be electrically connected to the battery can C. That is, the second current collector P2 electrically connects the electrode assembly E and the battery can C. The second current collector P2 may have, for example, a roughly plate shape. Preferably, the second current collector P2 may be electrically coupled to the second uncoated portion and the beading portion 21 of the battery can C. The second current collector P2 may be, for example, a negative electrode current collector.

That is, the electrode assembly unit EA may be configured in a structure in which the first current collector P1 is coupled to one surface of the electrode assembly E, and the second current collector P2 is coupled to the opposite surface of the electrode assembly E to which the first current collector P1 is coupled. For example, referring to FIG. 3, the first current collector P1 may be coupled to the upper surface of the electrode assembly E. More specifically, the first current collector P1 may be coupled to a surface of the electrode assembly E in a direction toward the battery can C among surfaces of the electrode assembly E. Conversely, the second current collector P2 may be coupled to the lower surface of the electrode assembly E. The second current collector P2 may be coupled to a surface opposite to the surface of the electrode assembly E in a direction toward the battery can C among surfaces of the electrode assembly E. At this time, the electrode assembly E and the current collectors P1, P2 may be coupled, for example, by welding.

The insert device 1 may be configured to insert the electrode assembly unit EA in the form of a jelly roll into a cylindrical battery can C when manufacturing a cylindrical secondary battery.

Here, the can holder 10 may be configured to hold the battery can C. The can holder 10 may have a shape capable of gripping the cylindrical battery can C. For example, the can holder 10 may be configured in the form of clips whose inner surface is dug in a cylindrical shape to be able to grip the cylindrical shape. The can holder 10 may be configured to hold at least a portion of the battery can C in the longitudinal direction. For example, referring to FIGS. 1 and 2, the can holder 10 may hold the battery can C at two points along the longitudinal direction of the battery can C. However, it is obvious that the can holder 10 of the present disclosure is not limited to such a shape. Any can holder 10 capable of holding the battery can C will be said to be included in the scope of the can holder 10 of the present disclosure.

In one aspect of the present disclosure, the can holder 10 may hold the can so that the opening C1 of the can faces downward and the closed portion C2 of the can faces upward. For example, referring to FIGS. 1 and 2, the can holder 10 holds the battery can C so that the opening C1 of the battery can C faces downward and the closed portion C2 of the battery can C faces upward. That is, the electrode assembly unit EA may be inserted into the opening C1 of the battery can C provided at the bottom of the battery can C and moved toward the closed portion C2 provided at the top of the battery can C.

In this way, the reason why the battery can C is configured such that the opening C1 thereof faces downward and the closed portion C2 thereof faces upward is to insert the electrode assembly unit EA upward. For example, if the electrode assembly unit EA is inserted downward, a free-fall method may be adopted. However, this free-fall method has the problem that the insertion speed may not be controlled and positive pressure is generated. On the other hand, the method of inserting the electrode assembly unit EA downward while gripping it may unnecessarily complicate the structure of the can holder 10, which may lead to problems such as an increase in management points and a decrease in processability. Therefore, it is preferable that the electrode assembly unit EA is inserted upward, and according to the above structure of the present disclosure, the electrode assembly unit EA may be inserted in a direction from the bottom to the top. Accordingly, it becomes possible to insert the electrode assembly unit EA while minimizing the generation of positive pressure with a simple structure. That is, according to the processes of FIGS. 1 and 2, the battery can C may be supplied into the insert device 1 by such a can holder 10.

Referring to FIGS. 1 and 2, the lower stopper 20 may be configured to insert the electrode assembly unit EA into the battery can C.

Specifically, the lower stopper 20 may be configured to support the electrode assembly unit EA from below. Additionally, the lower stopper 20 may be configured to be movable in a direction parallel to the central axis of the electrode assembly unit EA. For example, the lower stopper 20 may push the electrode assembly unit EA located below the can upward to push the electrode assembly unit EA toward the opening C1 of the battery can C. That is, in the state of FIG. 1, the lower stopper 20 may push the electrode assembly unit EA upward. Accordingly, the electrode assembly unit EA passes through the opening C1 of the battery can C and rises toward the closed portion of the battery can C, which may result in the state of FIG. 2.

In still another aspect of the present disclosure, the lower stopper 20 may be configured in a roughly cylindrical shape. That is, the lower stopper 20 may be configured in the form of a roughly elongated rod, and the central axis of the rod may coincide with the central axis of the electrode assembly unit EA.

In one aspect of the present disclosure, the radius of the lower stopper 20 may be configured to be larger than the radius of the winding center hole H1 of the electrode assembly unit EA. For example, the radius of the cylindrical lower stopper 20 may be configured to be slightly larger than the radius of the winding center hole H1 of the electrode assembly unit EA.

According to this structure, the radius of the lower stopper 20 is larger than the radius of the winding center hole H1 of the electrode assembly unit EA, so that the lower stopper 20 may support the electrode assembly unit EA and the second current collector P2 from below. Additionally, since the radius of the cylindrical lower stopper 20 is slightly larger than the radius of the winding center hole H1 of the electrode assembly unit EA, the contact area between the lower stopper 20 and the electrode assembly unit EA may be minimized. As a result, the possibility of damage to the electrode assembly unit EA may be minimized.

In another embodiment, the radius of the lower stopper 20 may be configured to be larger than the radius of the second current collector hole formed at the center of the second current collector P2 that is coupled to the electrode assembly unit EA. For example, the radius of the lower stopper 20 may be configured to be larger than the radius of the second current collector hole and smaller than or equal to the radius of the central region of the second current collector P2.

According to this structure, the radius of the lower stopper 20 is larger than the radius of the second current collector hole, so that the lower stopper 20 may support the electrode assembly unit EA and the second current collector P2 from below. Additionally, since the radius of the lower stopper 20 is smaller than or equal to the radius of the central region of the second current collector P2, the leg portion of the second current collector P2 extending from the outer circumference of the central region may not be affected by the lower stopper 20.

In still another aspect of the present disclosure, the lower stopper 20 may include a polyetheretherketone (PEEK) material. According to this embodiment, even if the lower stopper 20 comes into contact with the electrode assembly unit EA and/or the second current collector P2, damage may be minimized.

Referring to FIGS. 1 and 2 again, the air blower 30 may be provided on the lower stopper 20. The air blower 30 may be configured to inject air into the electrode assembly unit EA in a direction toward the battery can C.

The air blower 30 may include a positive pressure generator 31 that generates positive pressure and an air pipe 32 that may move air.

The positive pressure generator 31 may be, for example, a blower. Air generated from the positive pressure generator 31 may move toward the electrode assembly unit EA through the air pipe 32.

In one aspect of the present disclosure, the air pipe 32 may be configured to be embedded inside the lower stopper 20. For example, referring to FIGS. 1 and 2, the air pipe 32 in the shape of a cylindrical tube may be provided within the cylindrical lower stopper 20. Accordingly, air generated from the positive pressure generator 31 may flow along the air pipe 32 to reach the electrode assembly E. More specifically, the air may be ejected toward the winding center hole H1 of the electrode assembly E.

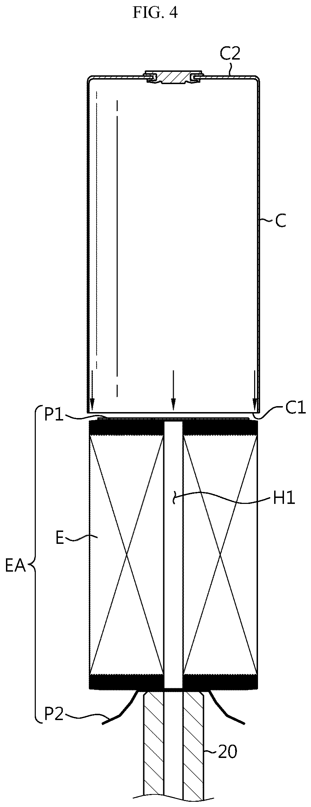

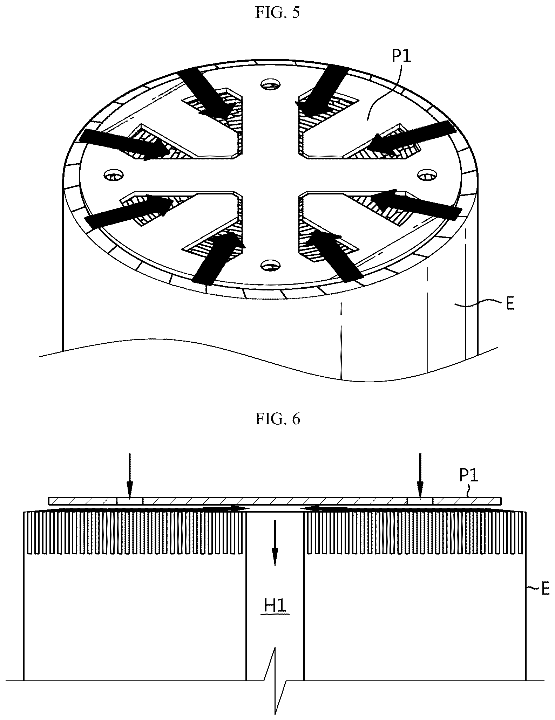

FIG. 4 is a view for describing the movement of air in a process in which an electrode assembly unit EA is inserted into a battery can C. FIG. 5 is a view for describing a direction in which air is injected into an electrode assembly unit EA when air movement as in FIG. 4 occurs, and FIG. 6 is a view for describing a process in which air injected into an electrode assembly unit EA moves inside an electrode assembly E when air movement as in FIG. 4 occurs.

Referring to FIGS. 4 and 5, by means of the insert device 1 according to an embodiment of the present disclosure, the electrode assembly unit EA may be inserted upward toward the battery can C. More specifically, as the lower stopper 20 supporting the electrode assembly unit EA from below rises upward, the electrode assembly unit EA may be inserted into the battery can C. In the process, as shown in FIG. 4, stagnant air inside the battery can C may be discharged to the outside of the battery can C through the winding center hole H1 of the electrode assembly E.

Meanwhile, as can be seen in FIG. 4, the first current collector P1 is coupled to one surface of the electrode assembly E. At this time, the first current collector P1 may have an area smaller than the area of one surface of the electrode assembly E. For example, the first current collector P1 may be a plate-like structure having a roughly disk shape and a partially perforated interior. However, the first current collector P1 may have a shape in which the center portion is not perforated for welding coupling to a terminal of the battery. In other words, since the center portion is blocked, the first current collector P1 may have a structure that covers the winding center hole H1 of the electrode assembly E. However, since the electrode assembly E and the first current collector P1 are not welded on all surfaces where they contact each other, there may exist a minute gap between the first current collector P1 and the electrode assembly E. Therefore, as can be seen in FIG. 5, when air flows into the electrode assembly E through the perforated region of the first current collector P1, the inflow air may move toward the winding center hole H1 of the electrode assembly E along the arrow path of FIG. 6. At this time, referring to FIGS. 4 and 6 again, the diameter of the winding center hole H1 of the electrode assembly E is significantly smaller than the diameter of the inside of the battery can C, so that the flow rate flowing through the winding center hole H1 may be relatively significantly increased.

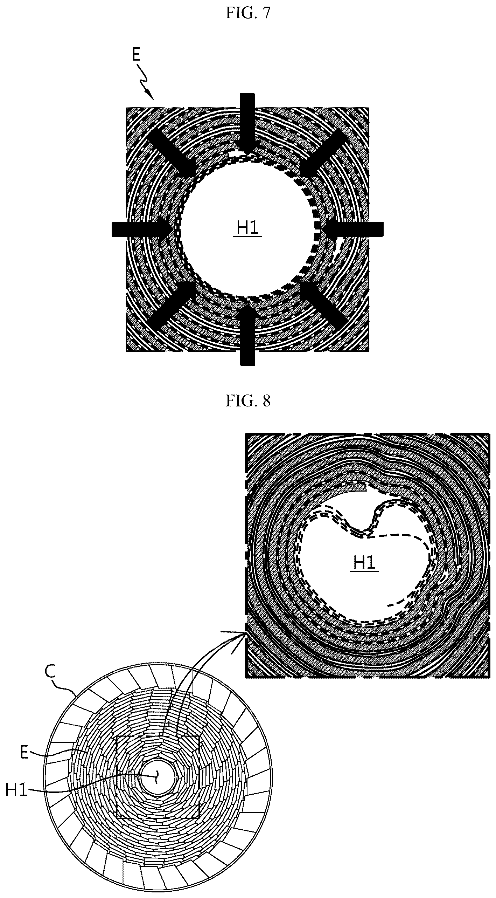

FIG. 7 is a view for describing a region in which the electrode assembly E is affected by air during the process of FIGS. 4 to 6, and FIG. 8 is a view for describing a state in which the electrode assembly E is deformed by the effect due to air during the process of FIGS. 4 to 6.

In another aspect of the present disclosure, the separator constituting the inside of the winding center hole H1 has small rigidity due to its thin thickness and weak binding force by contacting the core portion, so that the separator located inside the winding center hole H1 may be deformed in the radial direction due to the flow flowing in the total height direction. For example, referring to FIG. 7, air may flow into the separator located near the winding center hole H1 of the electrode assembly E in the direction of the arrow due to the shape of the first current collector P1. As a result, as shown in FIG. 8, the separator located inside the winding center hole H1 may be deformed in the radial direction due to the flow flowing in the total height direction. That is, in the vicinity of the winding center hole H1 of the electrode assembly E, flow resistance may occur due to a sudden change in diameter. Accordingly, the pressure p1 inside the battery can C may increase.

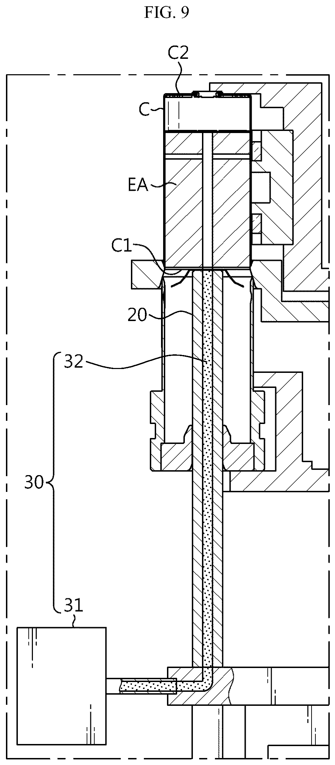

For example, assuming that the cross-sectional area of the battery can C is about 1,597.51 mm², the cross-sectional area of the winding center hole H1 of the electrode assembly E is about 75.84 mm², and the PPM is about 130, if the insertion speed of the electrode assembly unit EA is about 42.55 cm/s, the flow speed of the air flowing into the winding center hole H1 of the electrode assembly E becomes about 896.28 cm/s, and thus it can be seen that the flow speed increases rapidly. That is, due to such a sharply increased flow speed, the separator located around the winding center hole H1 may be subjected to inevitable deformation. However, according to the air blower 30 of the present disclosure, deformation of the separator located around the winding center hole H1 may be effectively prevented by significantly reducing the difference in the flow speed and the pressure p1 inside the battery can C. This will be described in more detail with reference to FIGS. 9 to 11.

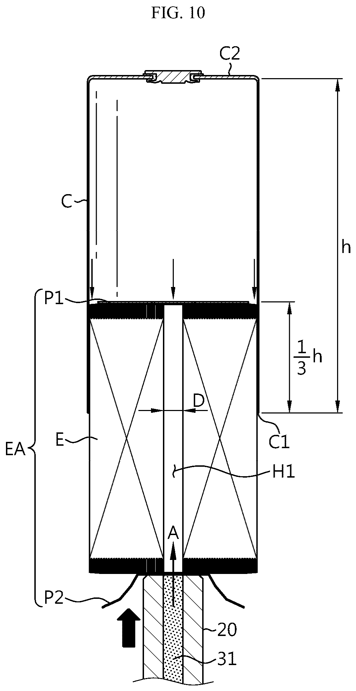

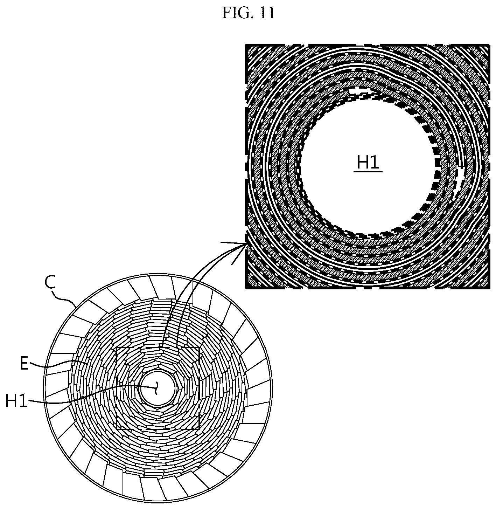

FIG. 9 is a view for describing a process in which air is injected into an electrode assembly E and a battery can C by an air blower in an insert device 1 according to an embodiment of the present disclosure, and FIG. 10 is a view for describing an air movement path by an air blower in an insert device 1 according to an embodiment of the present disclosure. FIG. 11 is an enlarged view of a winding center hole H1 of an electrode assembly E inserted into a battery can C by an insert device 1 according to an embodiment of the present disclosure.

In one aspect of the present disclosure, the air blower 30 may be configured to inject air toward the winding center hole H1 of the electrode assembly unit EA.

For example, referring to FIG. 9, an air pipe 32 is embedded inside the lower stopper 20 that supports the lower surface of the electrode assembly unit EA. Therefore, air generated from the positive pressure generator 31 may be injected into the electrode assembly unit EA through the air pipe 32. More specifically, air may be injected toward the winding center of the electrode assembly E.

Preferably, the air blower 30 may be configured to inject air in the insertion direction of the electrode assembly unit EA. For example, referring to FIG. 9, the electrode assembly unit EA may be inserted into the battery can C while moving from the bottom to the top in a direction parallel to the central axis of the electrode assembly unit EA. Therefore, the air blower 30 may be configured to inject air from the bottom to the top in a direction parallel to the central axis of the electrode assembly unit EA.

In another aspect of the present disclosure, the air blower 30 may be configured to offset the pressure acting on the winding center hole H1 region of the electrode assembly E.

For example, referring to FIG. 10, the air blower 30 may inject air toward the winding center hole H1 of the electrode assembly E. Meanwhile, once the cross-sectional area of the battery can C and the cross-sectional area of the winding center hole H1 of the electrode assembly E are determined, the flow rate of the air flowing through the winding center hole H1 may be calculated according to the insertion speed of the electrode assembly E. By substituting this value into the Bernoulli's equation, the pressure p1 acting inside the battery can C upon insertion of the electrode assembly unit EA may be calculated. Ultimately, when the pressure p1 acting inside the battery can C upon insertion of the electrode assembly unit EA is approximately atmospheric pressure, it can be seen that the pressure acting on the winding center hole H1 region of the electrode assembly E is offset. That is, the air blower 30 may calculate an air pressure capable of offsetting the pressure acting on the winding center hole H1 region of the electrode assembly E, and inject air equivalent to the calculated value toward the winding center hole H1 of the electrode assembly E. As a result, according to the above configuration, it is possible to offset the pressure of vulnerable parts of the separator, and accordingly, the level of reform loosening may be effectively reduced. Therefore, the battery capacity and life may be improved.

In still another aspect of the present disclosure, the air blower 30 may be configured to inject air so that the difference between the internal pressure p1 of the battery can C and the external pressure p2 of the battery can C is about 5 mbar or less.

For example, referring to FIG. 10, the inventor of the present disclosure confirmed that the separator near the winding center hole H1 was deformed when the difference between the internal pressure p1 of the battery can C and the external pressure p2 of the battery can C is greater than about 10 mbar, based on the case where the diameter of the winding center hole H1 of the electrode assembly E is about 6 mm. On the other hand, when the difference between the internal pressure p1 of the battery can C and the external pressure p2 of the battery can C becomes about 5 mbar through pressure offset by the air blower 30, it was confirmed that the separator near the winding center hole H1 was not deformed.

Therefore, according to the above configuration of the present disclosure, the difference between the internal pressure p1 of the battery can C and the external pressure p2 of the battery can C may be maintained at a trace value, thereby effectively preventing deformation behavior of the separator.

In still another aspect of the present disclosure, the air blower 30 may be configured to operate after the electrode assembly unit EA is inserted to a predetermined length of the battery can C in the longitudinal direction.

For example, referring to FIG. 10, the air blower 30 may be configured to operate after the electrode assembly unit EA is inserted to about 1/3 to 1/2 point of the battery can C in the longitudinal direction. In the insertion process of the electrode assembly unit EA, internal hydraulic pressure is released and affects the core portion after the electrode assembly unit EA is inserted to about 1/3 to 1/2 point of the battery can C, so that it is preferable to perform pressure offset through operation of the air blower 30 after that point. Meanwhile, the air injection may occur temporarily at the time when the electrode assembly unit EA is inserted to about 1/3 to 1/2 point of the battery can C, or may occur continuously after the time when the electrode assembly unit EA is inserted to about 1/3 to 1/2 point of the battery can C.

In still another aspect of the present disclosure, the air blower 30 may be configured to inject air so that the diameter of the winding center after deformation of the electrode assembly unit EA is greater than about 75% of the diameter of the winding center before deformation of the electrode assembly unit EA.

For example, referring to FIG. 10, in the case where the diameter of the winding center hole H1 before deformation of the electrode assembly E is about 6 mm, if the diameter of the winding center hole H1 deformed after the insertion process of the electrode assembly unit EA becomes about 4.5 mm or less, it was confirmed that the separator was excessively damaged during the cathode rivet welding (CRW) process for welding the terminal and the first current collector P1, and issues of reduced battery capacity and life occurred accordingly. Therefore, it is preferable that the diameter of the winding center hole H1 deformed after the insertion process of the electrode assembly unit EA is greater than about 4.5 mm. That is, it is preferable that the diameter of the winding center after deformation of the electrode assembly unit EA is greater than about 75% of the diameter of the winding center before deformation of the electrode assembly unit EA, and the air blower 30 of the present disclosure may be configured to calculate and inject the amount and/or speed of air so that the diameter of the winding center after deformation of the electrode assembly unit EA is greater than about 75% of the diameter of the winding center before deformation of the electrode assembly unit EA.

More preferably, the air blower 30 may be configured to inject air so that the pressure within the battery can C is less than or equal to a value at which the shape of the winding center of the electrode assembly unit EA is not deformed. For example, referring to FIG. 11, it can be seen that the separator located near the winding center hole H1 deformed after the insertion process of the electrode assembly unit EA is not deformed.

That is, according to the above configuration of the present disclosure, when the air inside the battery can C is discharged during the insertion process of the electrode assembly E, deformation of the separator may be prevented by reducing pressure through air injection. Additionally, by reducing the level of reform loosening, the battery capacity and life may be improved due to the improvement of core impingement. In addition, damage to the separator of the electrode assembly E may be reduced and the process capability may be improved, and furthermore, cost reduction may be achieved.

Meanwhile, the terms indicating directions as used herein such as upper and lower are used for convenience of description only, and it is obvious to those skilled in the art that the terms may change depending on the position of the stated element or an observer.

The present disclosure has been hereinabove described with regard to a limited number of embodiments and drawings, but the present disclosure is not limited thereto and it is obvious that a variety of modifications and variations may be made thereto by those having ordinary skill in the technical field pertaining to the present disclosure within the technical aspect of the present disclosure and the scope of the appended claims and their equivalents.

### [Explanation of Reference Signs]

- 1: insert device
- E: electrode assembly
- H1: winding center hole
- C: battery can
- C1: opening
- C2: closed portion
- P1: first current collector
- P2: second current collector
- 10: can holder
- 20: lower stopper
- 30: air blower
- 31: positive pressure generator
- 32: air pipe

## Claims

1. An insert device for inserting an electrode assembly unit comprising an electrode assembly and a first current collector coupled to one surface of the electrode assembly into a battery can, the insert device comprising:
a can holder holding the battery can;
a lower stopper supporting the electrode assembly unit from below and configured to be movable in a direction parallel to a central axis of the electrode assembly unit; and
an air blower provided on the lower stopper and configured to inject air into the electrode assembly unit in a direction toward the battery can.

2. The insert device according to claim 1,
wherein the first current collector is coupled to a surface of the electrode assembly in a direction toward the battery can among surfaces of the electrode assembly.

3. The insert device according to claim 1,
wherein the first current collector has an area smaller than an area of one surface of the electrode assembly.

4. The insert device according to claim 1,
wherein the lower stopper is configured to insert the electrode assembly unit into the battery can.

5. The insert device according to claim 1,
wherein the lower stopper pushes the electrode assembly unit positioned below the can upward to push the electrode assembly unit toward an opening of the battery can.

6. The insert device according to claim 1,
wherein the air blower is configured to inject air toward a winding center of the electrode assembly unit.

7. The insert device according to claim 1,
wherein the air blower is configured to inject air in an insertion direction of the electrode assembly unit.

8. The insert device according to claim 1,
wherein the air blower is configured to inject air from the bottom to the top in a direction parallel to a central axis of the electrode assembly unit.

9. The insert device according to claim 1,
wherein the air blower is configured to offset pressure acting on the winding center hole region of the electrode assembly.

10. The insert device according to claim 1,
wherein the air blower injects air so that the difference between the internal pressure of the battery can and the external pressure of the battery can is 5 mbar or less.

11. The insert device according to claim 1,
wherein the air blower is configured to operate after the electrode assembly unit is inserted to a predetermined length of the battery can in the longitudinal direction.

12. The insert device according to claim 1,
wherein the air blower is configured to operate after the electrode assembly unit is inserted to a 1/3 point of the battery can in the longitudinal direction.

13. The insert device according to claim 1,
wherein the air blower injects air so that the diameter of the winding center after deformation of the electrode assembly unit is greater than 75% of the diameter of the winding center before deformation of the electrode assembly unit.

14. The insert device according to claim 1,
wherein the air blower injects air so that the pressure within the battery can is less than or equal to a value at which the shape of the winding center of the electrode assembly unit is not deformed.
